(19) Europäisches Patentamt

European Patent Office

Office européen des brevets

(11) Veröffentlichungsnummer: **0 306 621 B1**

# (12) EUROPÄISCHE PATENTSCHRIFT

(45) Veröffentlichungstag der Patentschrift: **07.10.92**

(21) Anmeldenummer: **88108392.7**

(22) Anmeldetag: **26.05.88**

(51) Int. Cl.⁵: **H04N 5/21**

(54) **Schaltung zur Kompensation der durch ein Verwischungssignal hervorgerufenen Störungen in Satelliten-Fernsehempfängern.**

(30) Priorität: **09.09.87 DE 3730181**

(43) Veröffentlichungstag der Anmeldung:
**15.03.89 Patentblatt 89/11**

(45) Bekanntmachung des Hinweises auf die
Patenterteilung:
**07.10.92 Patentblatt 92/41**

(84) Benannte Vertragsstaaten:
**AT BE CH DE FR GB IT LI**

(56) Entgegenhaltungen:

**NACHRICHTENTECHNISCHE ZEIT- SCHRIFT NTZ, 21. Jahrgang, Heft 3, MUrz 1968, Berlin LOTHAR FRIEDERICHS "M!glich- keiten zur TrUgerverwischung bei TV- bertragung Uber Nachrichtensatelliten" Seiten 129-135**

(73) Patentinhaber: **GRUNDIG E.M.V. Elektro-Mechanische Versuchsanstalt Max Grundig holländ. Stiftung & Co. KG.**
**Kurgartenstrasse 37**
**W-8510 Fürth/Bay.(DE)**

(72) Erfinder: **Rehak, Manfred GRUNDIG E.M.V. Max Grundig holländ.**
**Stiftung & Co KG Kurgartenstrasse 37**
**W-8510 Fürth/Bay.(DE)**
Erfinder: **Spörl, Manfred GRUNDIG E.M.V. Max Grundig holländ.**
**Stiftung & Co KG Kurgartenstrasse 37**
**W-8510 Fürth/Bay.(DE)**

**Beschreibung**

Die vorliegende Erfindung betrifft eine Schaltung zur Kompensation der durch ein Verwischungssignal hervorgerufenen Störungen in Satelliten-Fernsehempfängern mit den im Oberbegriff des Anspruchs 1 angegebenen Merkmalen.

Bei bandbegrenzten frequenzmodulierten Übertragungssystemen wie der Übertragung von Fernsehsignalen über Satelliten wird dem zu übertragenden Fernsehsignal vor der Frequenzmodulation eine bildfrequente Dreieckspannung additiv überlagert. Diese bildfrequente Dreieckspannung wird als Verwischungssignal bezeichnet und hat die Aufgabe, das Entstehen diskreter stationärer Spektralfrequenzen und damit die Konzentration der gesamten Energie des FM-Trägers auf einer diskreten Frequenz zu vermeiden, da ansonsten in den nachfolgenden Schaltungen Übersteuerungen und Intermodulationen auftreten würden.

In Satelliten-Fernsehempfängern ruft dieses Verwischungssignal Störungen hervor, da es dem demodulierten Videosignal additiv überlagert ist, was eine unerwünschte Verschiebung des Gleichspannungspegels bedeutet. Dies führt zu Problemen bei der Synchronisierung und zu Bildfehlern in Form von unerwünschten Helligkeitsänderungen in horizontaler und vertikaler Richtung.

Zur Verminderung der durch das Verwischungssignal hervorgerufenen Störungen werden üblicherweise Klemmschaltungen verwendet, mittels welcher der Austastpegel des Videosignals auf einen gewünschten Wert geklemmt wird. Mittels solcher Klemmschaltungen können die genannten Störungen aber nur teilweise beseitigt werden. Insbesondere bleiben unerwünschte Helligkeitsänderungen in horizontaler Richtung ebenso bestehen wie Probleme bei der Vertikalsynchronisierung, da zum einen bekannte Klemmschaltungen während der aktiven Zeilenzeit wirkungslos sind und zum anderen während der vertikalen Austastlücken kein korrektes, die Amplitude des Verwischungssignals kennzeichnendes Steuersignal zur Verfügung steht.

Ferner is aus der DE-B-22 17 938 eine am Eingang eines Fernsehsenders angeordnete Klemmschaltug für ein Fernseh-Videosignal bekannt. Diese bekannte Schaltung weist eine Gegenkopplungsschleife auf, in welcher das Signal zunächst demoduliert und zeilenfrequent während der hinteren Schwarzschulter abgetastet wird. Diese Abtastung liefert amplitudenmodulierte Impulse, welche die Schwankungen des Austastpegels darstellen. Die erhaltenen Impulse werden in der Polarität umgekehrt, impuldauerumgesetzt (d.h. verlängert), verstärkt und integriert. Das durch Integration erhaltene kontinuierliche Signal wird erneut abgetastet und das erhaltene Abtastsignal dem Eingangssignal der Schaltung zugeführt, um den Austastpegel des Videosignals auf einen gewünschten Wert zu klemmen. Weiterhin ist aus der DE-B-22 17 938 eine Schaltung bekannt, bei der das demodulierte Signal zeilenfrequent während der hinteren Schwarzschulter abgetastet, in der Polarität umgekehrt, verstärkt, integriert und das so erhaltene Signal dem Eingangssignal überlagert wird.

Aus der nicht vorveröffentlichten deutschen Patentanmeldung DE-A-36 07 164 (veröffentlicht am so. September 1987) ist eine Schaltung zur Kompensation der durch ein Verwischungssignal hervorgerufenen Störungen in Satelliten-Fernsehempfängern bekannt. Bei dieser Schaltung wird das wiedergegebene demodulierte Signal während des Auftretens der Synchronsignalspitzenwerte im Synchronsignalgemisch abgetastet und das durch Integration und Polaritätsumkehr ermittelte Signal dem Eingangssignal additiv überlagert. Diese Technik ist jedoch dann nicht verwendbar, wenn vom Sender her keine normgerechten Synchronsignale übertragen werden, wie beispielsweis bei der Übertragung verschlüsselter Signale.

Der Erfindung liegt die Aufgabe zugrunde, eine Schaltung anzugeben, mittels der die durch ein Verwischungssignal hervorgerufenen Störungen auch dann kompensiert werden können, wenn keine normgerechten Synchronsignale zur Verfügung stehen.

Diese Aufgabe wird durch die im Patentanspruch 1 angegebenen Merkmale gelöst. Vorteilhafte Ausgestaltungen ergeben sich aus den Unteransprüchen.

Die Vorteile der Erfindung bestehen insbesondere darin, daß die Signalauswertung unabhängig vom Bildinhalt erfolgt und auch in der vertikalen Austastlücke korrekte, die Amplitude des Verwischungssignals kennzeichnende Signale gewonnen werden können.

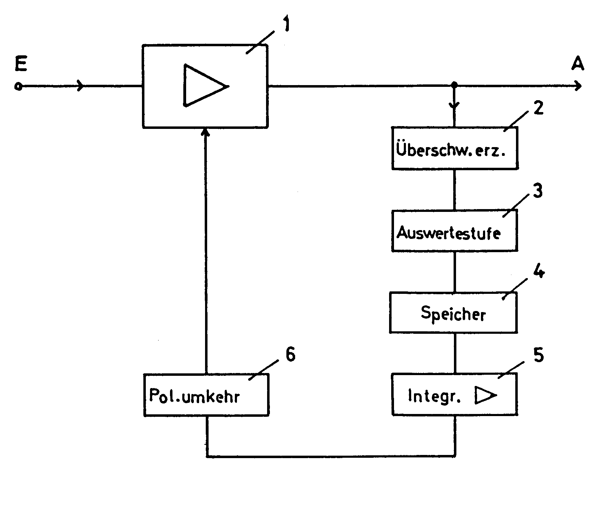

Weitere vorteilhafte Eigenschaften der beanspruchten Schaltung ergeben sich aus einem Ausführungsbeispiel, welches im folgenden anhand der Figur näher erläutert wird.

Dem Eingang E der in der Figur gezeigten Schaltung wird ein verschlüsseltes, demoduliertes Satelliten-Fernsehsignal zugeführt, welches von einem Verwischungssignal überlagert ist. Dieses Signal, welches keine normgerechten Synchronsignale enthält, aber mindestens einen definierten, periodisch auftretenden Bezugspegel aufweist (z. B. Schwarzwertbezugspegel), der sich von den dem Nutzsignal entsprechenden Pegeln unterscheidet, wird in einem Verstärker 1 verstärkt. Das Ausgangssignal des Verstärkers 1 gelangt an den Ausgang A der Schaltung, an den beispielsweise weitere signalverarbeitende Stufen des Satelliten-Fernsehempfängers angeschlossen sein können.

Weiterhin wird das Ausgangssignal der Verstärkers 1 einer Schaltung 2 zugeführt. In dieser Schaltung werden durch Laufzeitverschiebung der Oberwellen des Signals Überschwinger auf den periodisch auftretenden Bezugspegeln erzeugt. Der Vorteil der Erzeugung von Überschwingern liegt u. a. darin, daß die sich anschließende Auswertung unabhängig von der Zeitdauer der periodisch auftretenden Bezugspegel wird, da die Überschwinger nur an den Flanken des Signals auftreten. Die Amplituden dieser Überschwinger, welche außerhalb des Pegelbereiches des Nutzsignals liegen, werden in einer Auswertestufe 3 mit einem vorbestimmten weiteren Bezugspegel verglichen. Die den weiteren Bezugspegel überschreitenden Amplitudenwerte werden in einem Speicher 4 abgespeichert. Mit dem Ausgang des Speichers 4 ist ein integrierender Verstärker 5 verbunden, in welchem die den weiteren Bezugspegel überschreitenden Amplitudenwerte verstärkt und aufintegriert werden. Das Ausgangssignal des integrierenden Verstärkers 5 wird einer Polaritätsumkehrstufe 6 zugeführt und dort in der Polarität umgekehrt. Das in der Polarität umgekehrte Signal wird dem Eingangssignal des Verstärkers additiv überlagert, um die durch das Verwischungssignal hervorgerufenen Störungen zu kompensieren.

Mittels der beschriebenen Schaltung kann sowohl bei der Übertragung von Satelliten-Fernsehsignalen mit normgerechten Synchronimpulsen als auch bei der Übertragung von Satelliten-Fernsehsignalen ohne normgerechte Synchronimpulse zuverlässig ein von der Amplitude des Verwischungssignals abhängiges Korrektursignal gewonnen werden. Voraussetzung ist lediglich, daß das übertragene Signal mindestens einen außerhalb des Pegelbereiches des Nutzsignals liegenden periodisch auftretenden Bezugspegel aufweist.

Eine vorteilhafte Weiterbildung der Erfindung besteht darin, in der Auswertestufe 3 zusätzlich eine (nicht gezeichnete) Schaltung zur Störbefreiung vorzusehen. Denn bei ungünstigen Übertragungsbedingungen können dem Nutzsignal auf der Übertragungsstrecke Störimpulse überlagert werden. erstrecken sich diese Störimpulse in Richtung des periodisch auftretenden Bezugspegels und sind die Amplituden der Störimpulse so groß, daß sie die Amplituden der Überschwinger übersteigen, dann können diese Störimpulse zu Störstreifen im wiedergegebenen Bild führen. Mittels der Schaltung zur Störbefreiung, die im wesentlichen eine Begrenzungswirkung hat, können derartige Störimpulse erkannt und ihr Einfluß auf die übrige Schaltung stark verringert werden, indem beispielsweise die Regelsteilheit der übrigen Schaltung herabgesetzt wird.

## Patentansprüche

1. Schaltung zur Kompensation der durch ein Verwischungssignal hervorgerufenen Störungen in Satelliten-Fernsehempfängern mit

- einem Verstärker, dessen Eingang ein demoduliertes Videosignal und ein dem Videosignal überlagertes Verwischungssignal zugeführt werden,
- einer Schaltung zur Gewinnung von die Amplitude des Verwischungssignals charakterisierenden Signalen,
- einem Speicher zur Abspeicherung dieser Signale,
- einem mit dem Ausgang des Speichers verbundenen integrierenden Verstärker,
- einer Polaritätsumkehrstufe zum Umkehren der Polarität des vom integrierenden Verstärker erzeugten Signals, und
- einer Schaltung zur Addition des Ausgangssignals der Polaritätsumkehrstufe zum Eingangssignal des Verstärkers, **dadurch gekennzeichnet,** daß
- die Schaltung zur Gewinnung von die Amplitude des Verwischungssignals charakterisierenden Signalen Schaltmittel (2) zur Erzeugung von Überschwingern im Signal und eine Auswertestufe (3) zum Vergleich der Amplitude der Überschwinger mit einem Bezugspegel enthält.

2. Schaltung nach Anspruch 1, **dadurch gekennzeichnet,** daß die Überschwinger durch Laufzeitverschiebung der Oberwellen des Signals gewonnen werden.

3. Schaltung nach Anspruch 1 oder 2, **dadurch gekennzeichnet,** daß die den Bezugspegel überschreitenden Amplitudenwerte der Überschwinger dem Speicher zugeführt werden.

4. Schaltung nach einem oder mehreren der vorhergehenden Ansprüche, **dadurch gekennzeichnet,** daß die Auswertestufe (3) zusätzlich eine Störbefreiungsschaltung zur Erkennung und nachfolgenden Unterdrückung von Störimpulsen enthält.

## Claims

1. Circuit for compensating interference in satellite television receivers, caused by a dispersal signal, comprising

- an amplifier whose input is fed a demodulated video signal and a dispersal signal superimposed on the video signal,
- a circuit for obtaining signals characterising the amplitude of the dispersal signal,
- a memory for storing these signals,
- an integrating amplifier connected to the output of the memory,

- a polarity reverser for reversing the polarity of the signal generated by the integrating amplifier, and
- a circuit for adding the output signal of the polarity reverser to the input signal of the amplifier,
  characterised in that
- the circuit for obtaining signals characterising the amplitude of the dispersal signal contains switching means (2) for generating overshoots in the signal and an evaluation stage (3) for comparing the amplitude of the overshoots with a reference level.

2. Circuit according to Claim 1, characterised in that the overshoots are obtained by shifting the propagation time of the harmonics of the signal.

3. Circuit according to Claim 1 or 2, characterised in that the amplitude values of the overshoots exceeding the reference level are fed to the memory.

4. Circuit according to one or more of the preceding claims, characterised in that the evaluation stage (3) additionally contains an interference suppression circuit for the detection and subsequent suppression of interfering pulses.

**Revendications**

1. Circuit pour compenser des perturbations provoquées par un signal d'estompage dans des récepteurs de télévision par satellite, comportant
   - un amplificateur, à l'entrée duquel sont envoyés un signal vidéo démodulé et un signal de maculage superposé au signal vidéo,
   - un circuit pour récupérer des signaux caractérisant l'amplitude du signal d'estompage,
   - une mémoire servant à mémoriser ces signaux,
   - un amplificateur intégrateur raccordé à la sortie de la mémoire,
   - un étage d'inversion de polarité pour inverser la polarité du signal produit par l'amplificateur intégrateur, et
   - un circuit pour additionner le signal de sortie de l'étage d'inversion de polarité au signal d'entrée de l'amplificateur,
     caractérisé en ce que
   - le circuit de récupération de signaux caractérisant l'amplitude du signal d'estompage contient des moyens de commutation (2) pour produire des suroscillations dans le signal et un étage d'évaluation (3) pour comparer l'amplitude des suroscillations à un niveau de référence.

2. Circuit selon la revendication 1, caractérisé en ce que les suroscillations sont obtenues au moyen d'un décalage du temps de propagation des harmoniques du signal.

3. Circuit selon la revendication 1 ou 2, caractérisé en ce que les valeurs d'amplitude, des suroscillations qui dépassent le niveau de référence sont envoyées à la mémoire.

4. Circuit selon une ou plusieurs des revendications précédentes, caractérisé en ce que l'étage d'évaluation (3) contient en outre un circuit d e suppression du parasitage, qui sert à identifier et supprimer ultérieurement des impulsions parasites.

E

A

1

Überschw. erz.

2

Auswertestufe

3

Speicher

4

Integr.

5

Pol.umkehr

6

EP 0 306 621 B1